# DEMANDE DE BREVET EUROPEEN

(11) **EP 4 201 225 A1**
(43) Date de publication de la demande: **28.06.2023**
(21) Numéro de dépôt: 22215173.0
(22) Date de dépôt: 20.12.2022
(51) Int. Cl.: A23L 7/109, A47J 27/18, A47J 27/00

(54) **PROCÉDÉ DE FABRICATION DE PÂTES LAMINÉES AVEC ÉLIMINATION D'AMIDON PÉRIPHÉRIQUE**

(30) Priorité: 22.12.2021 BE 202106040
(71) Demandeur: Pastificio della Mamma, 4040 Herstal (BE)
(72) Inventeur: HENRIQUES AIRES DE ALMEIDA, Jorge, 4630 Soumagne (BE); MONTAGNA, Vincent, 4041 Vottem (BE); VASSEN, Marie, 4800 Verviers (BE)
(74) Mandataire: Calysta NV

(57) **Abrégé**

Procédé pour la fabrication de pâtes laminées comprenant les étapes de : amenée d'un mélange contenant les ingrédients constitutifs, laminage du mélange, cuisson des pâtes laminées, conditionnement des pâtes laminées précuites ou cuites, le procédé comprend en aval de l'étape de cuisson, une étape d'élimination partielle d'amidon continuellement et uniformément par un passage dans un espace déterminé entre une première barre fixe et une deuxième barre mobile dimensionnée pour exercer une pression appuyant, sous l'effet de son propre poids, sur les pâtes laminées et agir comme un racloir sans détériorer la pâte.

## Description

La présente invention se rapporte à un procédé continu de fabrication de pâtes laminées à partir d'ingrédients constitutifs. La présente invention porte également sur un dispositif pour la fabrication de ces pâtes. La présente invention concerne aussi le produit à base de pâtes laminées précuites ou cuites.

La présente invention concerne plus particulièrement un procédé pour la fabrication de pâtes laminées à partir d'ingrédients constitutifs comprenant les étapes d'amenée d'un mélange contenant les ingrédients constitutifs, le laminage du mélange pour obtenir des pâtes laminées, la cuisson de ces pâtes pour obtenir des pâtes laminées précuites ou cuites, le conditionnement des pâtes laminées précuites ou cuites pour obtenir des pâtes prêtes à l'emploi.

Par les termes « pâtes prêtes à l'emploi », on entend des pâtes précuites ou cuites conditionnées en portions adéquates, destinées à être commercialisées chez un distributeur, voire après reconditionnement en portions plus petites, des pâtes précuites prêtes à subir une cuisson légère additionnelle ou prêtes à être cuisinées et/ou accommodées, des pâtes cuites ou des pâtes précuites prêtes à être accommodées, ou encore des pâtes accommodées et cuisinées. Typiquement, au sens de la présente invention, les pâtes sont conditionnées en portion industrielles, semi-industrielles ou individuelles selon qu'elles sont destinées à une collectivité, à un fabricant de plats cuisinés, à un détaillant ou à un consommateur.

Il est bien connu de l'état de la technique la fabrication de pâtes alimentaires. Les pâtes alimentaires constituent, un des principaux débouchés de la filière de blé dur. Les pâtes alimentaires existent sous plusieurs formes (tubulaire, non tubulaire, ruban, petite pâte, pâte farcie) et peuvent être consommées différemment selon les préparations.

Les pâtes alimentaires appartiennent à la famille des féculents, c'est-à-dire les aliments riches en amidon. L'amidon n'est pas soluble dans l'eau et est constitué de deux composantes moléculaires, l'amylose et l'amylopectine, qui peuvent être associés à des lipides, des protéines, des fibres ou des micronutriments. Lors de sa consommation, l'apport nutritionnel, défini par l'index glycémique de l'aliment amylacé, est fonction de plusieurs paramètres, notamment le rapport amylose-amylopectine, le traitement technique et thermique lors de la fabrication ou le processus inverse de gélatinisation qui se produit après cuisson. Les consommateurs cherchent de plus en plus à acheter des produits à index glycémique bas.

Pour répondre aux demandes des consommateurs, les industriels ont mis en place des procédés de fabrication tendant à éliminer une partie de l'amidon des produits amylacés. La cuisson des pâtes est réalisée dans des bacs de cuisson où l'amidon s'accumule à la surface de l'eau. Malheureusement, l'accumulation de l'amidon à la surface de l'eau est difficile à gérer au niveau industriel. En effet, une quantité importante d'amidon à la surface de l'eau pollue les cuissons successives des pâtes, les dernières pâtes cuites étant plus impactées que les premières pâtes cuites.

Le document EP0649623 décrit au § 0004 la problématique de l'accumulation d'une mousse d'amidon dans l'eau de cuisson des pâtes et y associe des problèmes de bouchage des tuyaux, de difficultés à suivre la cuisson des pâtes, des difficultés de nettoyage et un problème de texture des pâtes collantes à la dégustation. Selon ce document, lors de la production de pâtes cuites, la zone de cuisson comprend un réservoir d'eau ouvert muni d'un mécanisme de chauffage et conçu pour recevoir un panier de pâte à cuire à une échelle industrielle. Un capteur de niveau est positionné à côté du bord supérieur du réservoir d'eau, de telle manière que le niveau d'eau est ajusté lorsque la mousse d'amidon générée lors de la cuisson des pâtes est éliminée et collectée dans une autre cuve pour être traitée. L'élimination de la mousse d'amidon et des résidus de pâtes à la surface de l'eau de cuisson permet de minimiser les risques de bouchage des tuyaux et augmenter la visibilité sur les pâtes lors de la cuisson.

Bien que ce document semble prometteur pour résoudre le problème de l'accumulation d'amidon pendant la cuisson, ce procédé n'est pas avantageux en termes de consommation d'énergie, d'eau et n'est pas adapté à la cuisson de pâtes laminées. En effet, ce procédé de fabrication comprend une étape de cuisson où la cuisson des pâtes est faite dans des paniers individuels et où l'eau de cuisson est constamment renouvelée, l'eau arrivant dans le bac de cuisson étant chauffé au préalable à une température de cuisson aux alentours de 100°C.

Il existe donc un réel besoin de mettre au point une méthode de fabrication adaptée pour des pâtes laminées précuites ou cuites dont l'impact environnemental est réduit tout en fournissant des pâtes laminées digestes et visuellement attractives, à savoir lisses et uniformes.

Pour résoudre ce problème, il est prévu suivant l'invention un procédé continu tel que mentionné au début qui comprend en aval de l'étape de cuisson, une étape d'élimination partielle d'amidon desdites pâtes laminées précuites ou cuites, durant laquelle l'amidon présent sur ladite face supérieure et ladite face inférieure desdites pâtes laminées est continuellement et uniformément éliminé par un passage dans un espace déterminé entre une première barre fixe et une deuxième barre mobile dimensionnée pour exercer une pression comprise entre 4,5.10⁻³ et 6,5.10-³ N/m², de préférence comprise entre 5.10⁻³ et 6.10⁻³ N/m², plus particulièrement entre 5,4.10⁻³ et 5,8. 10⁻³ N/m² et appuyant, sous l'effet de son propre poids, sur la face supérieure desdites pâtes laminées et agir comme un racloir pour éliminer une quantité d'amidon de 60 à 90g/m² de pâtes laminées précuites ou cuites, de préférence de 65 à 85g/m² de pâtes laminées précuites ou cuites, de préférence de 70 à 80g/m2 de pâtes laminées précuites ou cuites sans en détériorer la pâte.

Comme on peut le constater, dans le procédé selon la présente invention, les pâtes laminées précuites ou cuites sont déplacées dans un espace déterminé entre une première barre fixe et une deuxième barre mobile, où elles sont soumises à une pression qui est exercée par la deuxième barre mobile sous son propre poids. De manière surprenante, le passage des pâtes laminées précuites ou cuites dans cet espace permet d'éliminer uniformément l'amidon sur les faces supérieure et inférieure des pâtes laminées précuites ou cuites et permet d'éviter l'accumulation de l'amidon sur les pâtes laminées précuites ou cuites. Il a donc été mis en évidence qu'il n'est pas requis de changer l'eau de cuisson continuellement pour résoudre ce problème, les pâtes laminées passent par la bouche entre les deux barres (la première barre fixe et la deuxième barre mobile) et sont en réalité raclées par un mécanisme extrêmement simple, ne demandant peu ou presque pas de maintenance.

Les pâtes laminées en sortie de cuisson sont souples, fragiles et ne peuvent pas être déplétées de tout l'amidon présent car celui-ci est requis au moment du dressage dans le cas de préparations cuisinées. En effet, l'amidon contribue au fait que la garniture va coller contre la pâte et par conséquent, il doit être éliminé de manière partielle (entre 60 à 90g/m²) afin d'en laisser suffisamment. Contre toute attente, au moment du passage entre les deux barres, d'une part l'amidon est éliminé partiellement, mais la longue bande de pâtes reste intacte, il n'y a pas de dégradation de surface, ni de déchirure. Ce simple déplacement dans un espace déterminé durant lequel la deuxième barre mobile exerce une pression sur les pâtes laminées pour éliminer l'amidon de surface permet une grande économie d'énergie tout en conservant l'entièreté de la longueur des pâtes laminées et permet de conserver la texture voulue ainsi que l'aspect visuel des pâtes en sortie de cuisson. Ce procédé permet aussi d'obtenir des pâtes laminées, visuellement lisses, appétissantes, digestes, sans défaut alors que les défauts sur des pâtes laminées de grandes tailles sont plus visuellement identifiables que des petites pâtes comme par exemple les coquillettes.

De manière avantageuse, l'étape d'amenée du mélange est précédée d'une étape de structuration comprenant en outre un dosage et une amenée des ingrédients constitutifs, un mélange des ingrédients constitutifs pour l'obtention d'une pâte granuleuse, et un pétrissage du mélange pour l'obtention d'une pâte homogène et lisse.

L'étape de structuration permet de développer la structure de la pâte. Au cours de la structuration, des constituants de la semoule de blé dur, par exemple, sont impliqués dans des mécanismes physico-chimiques pour obtenir une pâte de qualité. En effet, l'hydratation des constituants de la semoule permet d'assurer l'activation des protéines. Les protéines de gluten présentes dans le blé sont alors prêtes à interagir. Les protéines forment un réseau continu autour des granules d'amidon et ce réseau se désolubilise avant la gélatinisation des granules d'amidon.

De préférence, l'étape de cuisson au moins partielle des pâtes laminées pour obtenir des pâtes laminées précuites ou des pâtes laminées cuites comprend une ou plusieurs étapes parmi (i) un passage dans un bac d'eau chaude à une première température de cuisson pendant une première période de temps prédéterminée pour obtenir les pâtes laminées précuites ou les pâtes laminées cuites, (ii) une collecte des pâtes précuites ou des pâtes laminées cuites et un passage à l'air libre des pâtes laminées précuites ou des pâtes laminées cuites avec pulvérisation de liquide froid à une température comprise entre 4°C et 20°C, (iii) un passage dans un bac d'eau froide à une deuxième température pendant une deuxième période de temps prédéterminée des pâtes laminées précuites ou des pâtes laminées cuites pour obtenir des pâtes laminées précuites ou des pâtes laminées cuites à une température inférieure à 10°C.

L'étape de cuisson permet la gélatinisation de l'amidon et la réticulation des protéines. L'étape de cuisson permet de traiter les pâtes par hydrothermie à 100°C avec un excédent en eau. Une autre possibilité est d'effectuer l'étape de cuisson par vapeur d'eau. Au cours de la cuisson, le réseau maintien les granules d'amidon gélatinisées. L'avantage de gélatiniser les granules d'amidon est de rendre les pâtes digestes, pour cela la cuisson est faite par immersion dans de l'eau bouillante pendant une période de temps prédéterminée. Le temps optimal de cuisson est proportionnel au diamètre des pâtes crues et formées. Le temps de cuisson pour une même pâte sera différent en fonction du choix d'obtention, pâtes cuites ou pâtes précuites. Le temps de cuisson influence aussi l'index glycémique de l'aliment ingéré.

La pulvérisation de liquide froid présente quant à elle, lorsqu'elle est présente, l'avantage de diminuer la température de la pâte avant le passage dans le bac d'eau froide permettant ainsi d'éviter une élévation de la température dans le bac d'eau froide et d'éliminer une partie de l'amidon présente sur les pâtes.

Préférentiellement, selon la présente invention, l'étape de laminage est précédée d'une étape d'extrusion de pâte homogène et lisse.

Par le terme « extrusion » selon la présente invention, on entend un procédé de mise en forme des matières, qui consiste à pousser la matière à fluidifier à travers une filière.

La température d'extrusion est importante et ne doit de préférence pas atteindre plus de 40°C. Au-delà de 40°C, la structure protéique de la pâte traversant la filière de l'extrudeuse sera généralement trop compacte et cela entraine un risque de gélatinisation de l'amidon. Maintenir la température d'extrusion en dessous de 40°C facilite le nettoyage et permet de ne devoir utiliser que des brosses de nettoyage et sans requérir l'utilisation d'eau pour le nettoyage et ainsi éviter l'adhésion de la pâte contenant de l'amidon aux parois, ce qui se produit en présence d'eau.

Il est à noter que la pâte est chauffée, c'est-à-dire qu'elle subit une augmentation de température due à la pression d'extrusion et à la résistance à l'extrusion générée par la pâte dans l'extrudeuse. La température est ainsi de préférence maintenue en dessous de 40°C, soit en ajustant la pression, soit en ajustant la longueur de l'extrudeuse car la température croit au fur et à mesure que la pression dans l'extrudeuse croit ou encore en refroidissant les parois.

De préférence, selon la présente invention, le procédé comprend en outre une étape de découpe des pâtes laminées précuites ou cuites à une largeur prédéterminée et à une longueur prédéterminée.

Cela présente l'avantage de fournir des pâtes adaptées aux besoins. En effet, il est possible de faire des pâtes de petites tailles pour des particuliers ou des industriels qui souhaitent préparer des portions individuelles, comme par exemple, des lasagnes ou il est possible de vendre des grandes pâtes laminées à des industriels qui souhaitent les couper eux-mêmes.

Préférentiellement, la découpe des pâtes laminées se fait à l'aide d'une ou plusieurs roulette(s) à découper. Chaque roulette sert à découper la pâte et se présente sous la forme d'un disque de métal tournant dont on fait rouler le tranchant sur les pâtes laminées. La roulette à découper se tient par un manche. Au niveau industriel, chaque manche peut être soutenue par une structure métallique permettant de régler l'écart entre chaque roulette et de permettre de répéter uniformément les découpes et garantir l'exactitude de la largeur de chaque découpe de pâtes laminées.

De préférence, selon la présente invention, l'étape de découpe est suivie d'une étape de recyclage, dans laquelle les pâtes laminées découpées non conformes à la largeur prédéterminée et/ou à la longueur prédéterminée sont recyclées à l'étape de laminage.

Cela présente l'avantage d'éviter les pertes de pâtes laminées puisque les pertes sont recyclées pour être réutilisées dans les pâtes.

De préférence, selon la présente invention, le procédé comprend en outre une étape de garnissage des pâtes laminées précuites ou cuites.

De préférence, selon la présente invention, l'étape de garnissage desdites pâtes laminées précuites ou cuites est réalisée en amont d'une étape de montage desdites pâtes laminées précuites ou cuites.

Cela présente l'avantage de préparer des plats avec des pâtes laminées, de manière maîtrisé et répétable, comprenant l'ajout de garniture tels que de la viande, du poisson, des oeufs, des produits laitiers, des légumes ou tout autre aliment adapté au plat voulu.

D'autres formes de réalisation du procédé suivant l'invention sont indiquées dans les revendications annexées.

L'invention a aussi pour objet un dispositif pour la fabrication de pâtes laminées à partir d'ingrédients constitutifs comprenant une zone de laminage pour obtenir des pâtes laminées, reliée à une zone de cuisson pour obtenir des pâtes laminées précuites ou cuites comprenant en outre une cuve de cuisson, en aval de la zone de laminage, reliée à une zone de conditionnement pour obtenir des pâtes laminées précuites ou cuites prêtes à l'emploi, le dispositif comprend en outre, en aval de la zone de cuisson, une zone d'élimination partielle d'amidon comprenant une première barre fixe et une deuxième barre mobile dimensionnée pour exercer une pression comprise entre 4,5.10⁻³ et 6,5.10⁻³ N/m², de préférence comprise entre 5.10⁻³ et 6.10⁻³ N/m², plus particulièrement entre 5,4.10⁻³ et 5,8.10⁻³ N/m² et appuyant, sous l'effet de son propre poids, sur les pâtes laminées et formant un racloir agencé pour recevoir en continu lesdites pâtes laminées précuites ou cuites.

Le dispositif est agencé de telle manière à utiliser le moins d'énergie possible et ne demander qu'une maintenance réduite. En effet, l'amidon à la surface des pâtes laminées est éliminé par simple pression de la barre mobile dimensionnée pour exercer cette pression sous l'effet de son propre poids, sans mécanisme complexe, sur les pâtes laminées. Grâce au juste dimensionnement de la barre, la pression ainsi exercée sur les pâtes est suffisante pour enlever l'amidon de surface des pâtes laminées mais n'est pas trop importante pour risquer de les abîmer, de les casser ou de les couper.

De préférence, la deuxième barre mobile présente une longueur qui est positionnée transversalement par rapport au sens de défilement de la pâte. De part et d'autre de la longueur de la deuxième barre mobile se trouve des ergots. Les ergots sont de préférence engagés dans une fente présente sur des supports latéraux reliés au châssis du dispositif selon la présente invention. Les ergots coulissent librement dans le sens vertical dans la fente présente sur les supports latéraux, mais pas dans la direction de défilement. En effet, la fente dans les supports latéraux permet d'empêcher le déplacement de la deuxième barre et donc d'empêcher qu'elle soit entraînée par le mouvement de la pâte ou déplacée avec les vibrations du dispositif selon la présente invention. Ainsi, la barre coulisse librement de haut en bas, mais ne se déplace pas dans les autres directions.

De préférence, selon l'invention, le dispositif comprend en outre une troisième barre, de guidage, en amont du racloir.

Préférentiellement, la troisième barre est un rouleau. Cela présente l'avantage de permettre à la pâte laminée de glisser de manière continue jusqu'au racloir et ainsi soulager la tension dans la pâte laminée au sein du racloir.

Préférentiellement, le dispositif comprend une quatrième barre munie d'au moins un orifice de passage de l'eau, de préférence la quatrième barre étant une arrivée d'eau, en amont de la troisième barre pour rincer la pâte laminée avant le passage dans le racloir et ainsi éviter que l'amidon colle sur la deuxième barre mobile. Un autre avantage réside dans le fait que grâce à ce système d'humidification d'amidon, il n'est pas nécessaire de nettoyer le racloir régulièrement pendant le procédé de fabrication.

De préférence, selon l'invention, la deuxième barre mobile du racloir présente une hauteur comprise entre 1 et 10 cm, une largeur compris entre 0,5 et 5 cm et une longueur comprise entre 70 et 90 cm. Idéalement le poids de la deuxième barre mobile est compris entre 400 et 700 g.

De préférence, selon l'invention, le racloir est installé au-dessus d'une cuve différente de la cuve de cuisson, ce qui permet de pouvoir récupérer l'amidon dans une cuve séparée où il pourra être traité et d'éviter que l'amidon salisse l'eau de cuisson.

D'autres formes de réalisation du dispositif selon la présente invention sont mentionnées dans les revendications annexées.

La présente invention se rapporte par ailleurs à un produit à base de pâtes laminées précuites ou cuites, dans lequel les pâtes laminées précuites ou cuites présentent un taux d'humidité compris entre 40 et 60%, de préférence entre 45 et 55%, de préférence entre 49 et 51%.

De préférence, selon l'invention, les pâtes laminées précuites ou cuites sont déplétées d'un pourcentage d'amidon compris entre 1 et 10 %, de préférence entre 1,5 et 8 %, de préférence entre 2 et 6 %.

Cela présente l'avantage de conserver une couche humide contenant une quantité résiduelle d'amidon à la surface de la pâte laminée pour être facilement manipulable et pouvoir être incorporée dans des préparation sans avoir une couche épaisse et indigeste d'amidon. Il est nécessaire de garder un bon équilibre entre l'humidité de la pâte pour pouvoir la manipuler sans la casser, la présence minimum d'amidon à la surface de la pâte et la présence d'amidon dans la pâte.

De préférence, selon l'invention, le produit comprend une garniture comprenant un ou plusieurs constituants parmi des légumes, de la crème, de la sauce, du beurre, des oeufs, de la viande, du poisson, du fromage.

De préférence, selon l'invention, le produit comprend au moins deux couches de pâtes laminées précuites ou cuites.

De préférence, selon l'invention, les pâtes laminées précuites ou cuites sont conditionnées en portions prêtes à l'emploi.

D'autres formes de réalisation du produit à base de pâtes laminées précuites ou cuites suivant l'invention sont indiquées dans les revendications annexées.

D'autres caractéristiques, détails et avantages de l'invention ressortiront de la description donnée ci-après, à titre non limitatif et en faisant référence aux dessins et aux exemples.
La figure 1 est une vue de profil du dispositif pour la fabrication de pâtes laminées.
La figure 2a est une vue du dessus du dispositif comprenant le racloir.
La figure 2b est une vue de profil du racloir et de la troisième barre de guidage.

Sur les figures, les éléments identiques ou analogues portent les mêmes références.

La liste des références utilisées est décrite ci-dessous :
1 - ingrédients constitutifs
1a - semoule
1b - oeufs
1c - eau
2 - amenée
3 - mélange
4 - cuisson
4a - passage bac d'eau chaude
4b - collecte
4c - pulvérisation de liquide froid
4d - passage bac d'eau froide
5 - conditionnement
6 - élimination d'amidon
7 - face supérieure des pâtes laminées
8 - face inférieure des pâtes laminées
9 - racloir
9a - première barre fixe
9b - deuxième barre mobile
10 - structuration
11 - découpe
15 - laminage
25 - quatrième barre
26 - cuve
27 - troisième barre

Comme mentionné précédemment, la présente invention concerne le domaine des dispositifs pour la fabrication de pâtes alimentaires permettant une bonne rentabilité industrielle tout en conservant les propriétés organoleptiques, physiques, gustatives et/ou nutritives des pâtes laminées précuites ou cuites.

La fabrication de pâtes laminées précuites ou cuites est décrite ci-après, de la production primaire à la consommation humaine.

La fabrication commence par une amenée des ingrédients constitutifs de pâtes des silos de stockage au mélangeur. Les ingrédients constitutifs sont par exemple de la semoule et de l'eau, chaque ingrédient est stocké dans un silo individuel. D'autres constituants peuvent être ajoutés tels que des oeufs pasteurisés, de la tomate, des épinards ou d'autres arômes.... Par exemple, pour la fabrication de pâtes aux épinards, des épinards sous forme de poudre seront dissouts dans de l'eau avant d'être incorporés dans le mélange. L'eau, la semoule et les oeufs pasteurisés sont ensuite dosés et mélangés dans le mélangeur pour former une pâte granuleuse. Le mélange est effectué par rotation d'une vis sans fin. Ensuite, la pâte dans le mélangeur est pétrie, puis chauffée et mise sous pression pour être extrudée au travers de la filière d'une extrudeuse. Au cours de l'extrusion, la pâte devient, sous l'effet de la pression, lisse et homogène. Le dosage des ingrédients peut être ajusté pour obtenir une consistance de pâte souhaitée. Cette étape de mise en forme est réalisée de préférence à une température inférieure ou égale à 40°C sous une pression entre 80 et 120 bars, plus particulièrement autour de 100 bars.

Il est à noter que la pâte est chauffée, c'est-à-dire qu'elle subit une augmentation de température due à la pression d'extrusion et à la résistance à l'extrusion générée par la pâte dans l'extrudeuse. La température est ainsi de préférence maintenue en dessous de 40°C, soit en ajustant la pression, soit en ajustant la longueur de l'extrudeuse car la température croit au fur et à mesure que la pression dans l'extrudeuse croit ou encore en refroidissant les parois.

La pâte ainsi extrudée est laminée au travers d'un laminoir à pâte disposé en sortie d'extrudeuse pour obtenir de la pâte laminée en bande(s). Une étape de vérification peut être réalisée à la fin de l'étape de mise en forme, laquelle comprend l'extrusion et le laminage.

La pâte qui a été introduite dans le laminoir en sort sous forme de bande(s) dont la partie en aval du laminoir atteint un moyen de transport de préférence une bande de convoyage, tandis que, et ce de manière continue, une autre portion de pâte est en cours de laminage. On a donc en pratique, une partie de la pâte en amont du laminoir qui n'est pas encore laminée, une portion de pâte en cours de laminage alors que le reste de la pâte est déjà en convoyage. La ou les bandes de pâtes en sortie de laminoir défilent alors entre différentes étapes et installation. La pâte laminée en bande(s) défile ainsi dans un bac d'eau pour y subir une étape de cuisson qui forme la pâte laminée en bande(s) au moins partiellement cuites ou cuites. La pâte laminée en bande(s) passe ainsi sur la bande de convoyage dans un bac d'eau chaude à une première température de cuisson pendant une première période de temps prédéterminée. La cuisson pour l'obtention de pâtes précuites est généralement réalisée à une température d'environ 93°C pendant entre 1 et 10 minutes, de préférence entre 2 et 8 minutes, de préférence entre 3 et 6 minutes. La cuisson pour l'obtention de pâtes cuites se fait généralement à une température d'environ 93°C pendant entre 1 et 20 minutes, de préférence entre 2 et 18 minutes, de préférence entre 3 et 16 minutes. La cuisson peut être mise en oeuvre en plongeant la pâte laminée en bande(s) dans un bac d'eau en ébullition ou la faisant circuler au-dessus d'un bac d'eau, par vapeur d'eau. De préférence, l'eau est salée.

La pâte laminée en bande(s) en défilement via la bande de convoyage sort du bac de cuisson (ou le dépasse en cas de cuisson vapeur) où elle est exposée à l'air libre. Elle est alors pulvérisée par du liquide froid à une température comprise entre 4°C et 20°C. Une fois la pâte laminée en bande(s) légèrement refroidie à l'air libre, défile sur une bande de convoyage dans un bac d'eau froide à une deuxième température pendant une deuxième période de temps prédéterminée. En sortie du bac d'eau froide, les pâtes précuites ou les pâtes cuites sont à une température inférieure à 10°C.

La pâte laminée en bande(s) refroidie à une température inférieure à 10°C est ensuite soumise à une étape de lavage, en aval de l'étape de refroidissement. Les pâtes circulant sur la bande de convoyage pendant l'étape de refroidissement sont amenées dans une cuve de lavage où elles seront aspergées d'eau et amenées dans un espace déterminé entre une première barre fixe et une deuxième barre mobile dimensionnée pour exercer une pression comprise entre 4,5.10⁻³ et 6,5.10⁻³ N/m², de préférence comprise entre 5.10⁻³ et 6.10⁻³ N/m², plus particulièrement entre 5,4.10⁻³ et 5,8. 10⁻³ N/m² et appuyant, sous l'effet de son propre poids, sur la face supérieure des pâtes laminées. Les premières et deuxièmes barres mobiles forment ensemble un racloir et agissent pour éliminer une quantité d'amidon de 60 à 90g/m² de pâtes laminées précuites ou cuites, de préférence de 65 à 85g/m² de pâtes laminées précuites ou cuites, de préférence de 70 à 80g/ m² de pâtes laminées précuites ou cuites sans en détériorer la pâte. Le passage dans cet espace déterminé permet d'enlever l'amidon de la surface des pâtes de manière uniforme et continue, mais pas complète, tout en préservant la surface de la pâte laminée en bande(s).

la deuxième barre mobile présente une longueur qui est positionnée transversalement par rapport au sens de défilement de la pâte. De part et d'autre de la longueur de la deuxième barre mobile se trouve des ergots. Les ergots sont de préférence engagés dans une fente présente sur des supports latéraux reliés au châssis du dispositif selon la présente invention. Les ergots coulissent librement dans le sens vertical dans la fente présente sur les supports latéraux, mais pas dans la direction de défilement. En effet, la fente dans les supports latéraux permet d'empêcher le déplacement de la deuxième barre et donc d'empêcher qu'elle soit entraînée par le mouvement de la pâte ou déplacée avec les vibrations du dispositif selon la présente invention. Ainsi, la barre coulisse librement de haut en bas, mais ne se déplace pas dans les autres directions.

En aval de l'étape d'élimination d'amidon, la pâte laminée en bande(s) est découpée en feuilles de pâte de largeur et de longueur déterminées pour être commercialisées telles quelles ou assemblées par la suite lors de préparation de roulades, de cannellonis ou de lasagnes. Les chutes de pâte lors de la découpe sont généralement réutilisées dans la préparation. Dans le cas où les feuilles sont commercialisées seules, elles seront superposées pour être emballées, de préférence les feuilles seront espacées par de la farine ou une feuille de papier comme du papier sulfurisé pour éviter le collage entre elles. Une fois emballées, les pâtes sont ensuite conditionnées sous atmosphère inerte, puis pasteurisées une fois qu'elles sont emballées. Pour cela, les emballages sont par exemple soumis à de la vapeur humide à 93°C et à de l'air chaud à 105°C consécutivement. D'autres traitements par la chaleur peuvent être utilisés tel que la stérilisation, le traitement à ultra haute température ou l'appertisation. Des tests de qualité du produit sont effectués, tels que la détection de métal, le tri pondéral et l'oxymétrie. Les pâtes laminées précuites ou des pâtes cuites conditionnées en portions prêtes à l'emploi sont ensuite mises en bac/chariot, puis ces bacs/chariots sont mis dans des cartons pour être transportées et expédiées jusqu'au consommateur. Le stockage est de préférence réfrigéré.

Dans le cas où les feuilles sont destinées à être utilisées dans les préparations, elles sont assemblées avec les préparations à base de viande, de fromage, de légume ou tout autre ingrédient habituellement utilisées. Les préparations comprenant les feuilles de pâtes sont ensuite mises en bac, puis traversent un tunnel de congélation à une température inférieure à 12°C. A la sortie du tunnel de congélation, elles sont conditionnées pour être commercialisées. Des tests de qualité du produit sont effectués, tels que la détection de métal, le tri pondéral et l'oxymétrie. Les préparations comprenant les pâtes en feuilles conditionnées en portions prêtes à l'emploi sont ensuite mises en bac/chariot, puis ces bacs/chariots sont mis dans des cartons pour être transportées et expédiées jusqu'au consommateur. Le stockage est de préférence réfrigéré.

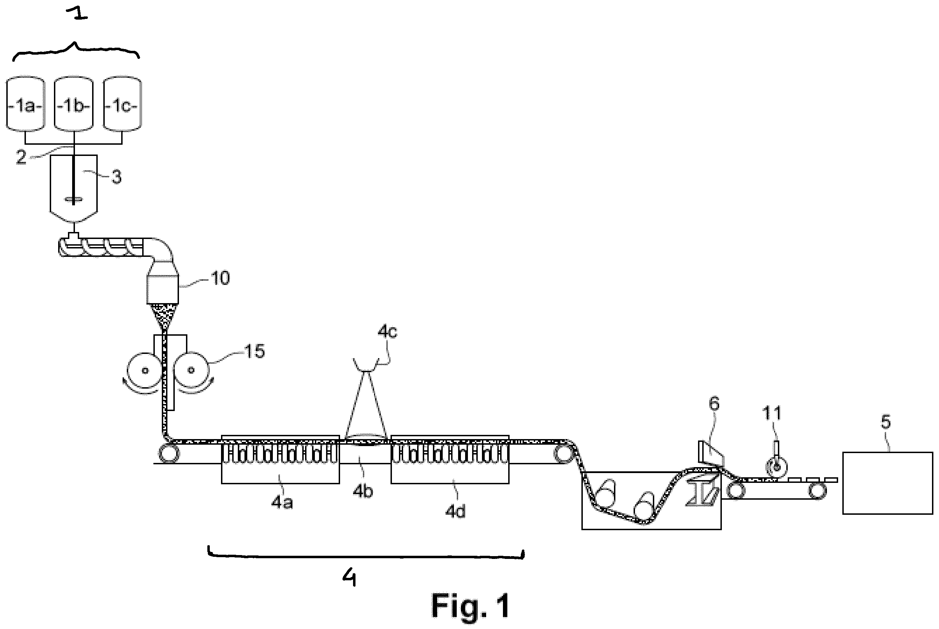

La figure 1 illustre le dispositif pour la fabrication de pâtes laminées précuites selon la présente invention. Comme on peut le voir, le dispositif selon l'invention comprend des moyens d'alimentations d'ingrédients constitutifs, notamment un moyen d'alimentation de farine de blé 1a, appelé communément « semoule » 1a, un moyen d'alimentation d'oeuf 1b et un moyen d'alimentation d'eau 1c. La farine de blé 1a peut être biologique, pour cela un autre moyen d'alimentation sera installé pour garantir la traçabilité de la filière biologique. Chaque ingrédient est dosé et amené dans un mélangeur 3. Il est possible de rajouter d'autres ingrédients tels que de la tomate, des épinards, du charbon, etc... Les ingrédients en poudre seront de préférence dissouts dans un liquide avant d'être incorporé au mélange. Le mélangeur 3 est alors mis en marche pour mélanger les ingrédients constitutifs. Après le mélange, la pâte obtenue est sous forme granuleuse. La pâte sous forme granuleuse est ensuite pétrie dans un pétrisseur séparé ou dans le même mélangeur 3 pour obtenir une pâte lisse et homogène. Si le dispositif comprend un mélangeur et un pétrisseur séparé, le mélangeur et le pétrisseur sont dans une zone de mélange 3.

Le dispositif selon la présente invention comporte en outre une vis sans fin 2 reliant une sortie de la zone de mélange 3 et une entrée de la zone de mise en forme permettant de convoyer la pâte granuleuse pétrie à la zone de mise en forme. La zone de mise en forme comprend en séquence une extrudeuse 10 et un laminoir 15 permettant d'obtenir des pâtes laminées aussi appelée de la pâte laminée en bande(s). L'extrudeuse 10 comprend sur son extrémité une filière d'extrusion où la pâte est formée en une feuille continue, sans être coupée. La filière de l'extrudeuse est de préférence orientée vers le bas. La pâte dans l'extrudeuse est de préférence chauffée à une température inférieure ou égale à 40°C, de préférence inférieure ou égale à 38°C, de préférence inférieure ou égale à 36°C. La pâte dans l'extrudeuse est homogène et lisse. La pâte dans l'extrudeuse est typiquement soumise à une pression comprise entre 80 et 120 bars, de préférence entre 90 et 110 bars, de préférence entre 98 et 102 bars. En sortie de l'extrudeuse, la pâte est amenée dans un laminoir pour obtenir une pâte laminée fine, c'est-à-dire qui présente une épaisseur inférieure à l'épaisseur de la pâte en sortie de l'extrudeuse.

Le dispositif comprend en outre une zone de cuisson 4, en aval de la zone de mise en forme. La zone de cuisson comporte un bac de cuisson qui est traversé par une bande de convoyage, laquelle relie la sortie du laminoir au bac de cuisson. La bande s'étend ainsi substantiellement horizontalement en sortie de laminoir et plonge ensuite dans le bac de cuisson, pour en ressortir en queue de bac. En fonctionnement, lorsque la pâte laminée en bande(s) sort de la zone de mise en forme, elle atterrit sur la bande de convoyage et traverse toute la zone de cuisson 4. La bande de convoyage est de préférence continue. La zone de cuisson 4 comprend un premier bac d'eau chaude 4a à une première température de cuisson pour obtenir des pâtes laminées précuites ou cuites. Le bac d'eau chaude 4a est à une température comprise entre 84 et 100°C, de préférence entre 86 et 98°C, de préférence entre 90 et 94°C. La zone de cuisson 4 comprend des moyens d'aspersions de liquide froid 4b à une température comprise entre 4°C et 20°C, en aval du premier bac de cuisson. La bande de convoyage passe sous les moyens d'aspersion de liquide froid. En fonctionnement, la pâte laminée en bande(s) circulant sur la bande de convoyage est donc amenée au contact de l'air ambiant où elles sont aspergées de liquide froid par les moyens d'aspersions 4c. La zone de cuisson 4 comprend un deuxième bac d'eau froide 4d, dans lequel plonge la bande de convoyage, en aval du premier bac de cuisson 4a. L'eau froide du bac d'eau froide est à une deuxième température, inférieure à 10°C pour refroidir la pâte laminée en bande(s)précuite ou cuite à une température inférieure à 10°C. De préférence, le temps de refroidissement dans le bac d'eau froide 4d est deux fois plus long que le temps de cuisson et donc, lorsqu'un convoyeur unique est présent, la longueur du bac de refroidissement est deux fois plus longue, le convoyeur étant généralement non débrayable. Les bacs sont donc dimensionnés pour un temps de séjour déterminé, tenant compte de la vitesse de déplacement de la charge du convoyeur.

Le dispositif tel qu'illustré sur la figure 1 comprend ensuite une zone d'élimination d'amidon 26, en aval de la zone de cuisson 4. Cette zone d'élimination d'amidon comprend un racloir formé d'une première barre fixe 9a et d'une deuxième barre mobile 9b dimensionnée pour exercer une pression comprise entre 4,5.10-3 et 6,5.10-3 N/m², de préférence comprise entre 5.10-3 et 6.10-3 N/m², plus particulièrement entre 5,4.10-3 et 5,8. 10-3 N/m² et appuyant, sous l'effet de son propre poids, sur les pâtes laminées. Un espace appelé bouche du racloir est formé entre la première barre fixe et la deuxième barre mobile reçoit en continu la pâte laminée en bande(s) sous forme précuite ou cuite et refroidie. Typiquement, une troisième barre de guidage 27 est présente, agencée pour guider la pâte laminée en bande(s) et. La troisième barre de guidage se situe en amont du racloir. Le dispositif comprend de préférence une quatrième barre 25, munie d'au moins un orifice de sortie d'eau qui pulvérise de l'eau sur la pâte laminée en bande(s) et humidifie la pâte laminée en bande(s) pour éliminer facilement l'amidon.

Le dispositif illustré sur la figure 1, selon la présente invention, comprend en outre une zone de découpe 11, en aval de la zone d'élimination d'amidon 26, de préférence suivie d'une étape de recyclage. La zone de découpe 11 comprend une bande de convoyage, de préférence une bande de convoyage différente de la bande de convoyage de la zone de cuisson. La bande de convoyage passe en dessous de couteaux de découpe. De préférence, au moins un couteau est utilisé pour la découpe de pâte laminée en feuilles de pâtes. Le couteau est de préférence une roulette à découper sous la forme d'un disque de métal tournant dont on fait rouler le tranchant sur les pâtes laminées. La roulette à découper se tient par un manche. Le manche est soutenu par une structure métallique permettant de régler l'écart entre chaque roulette pour garantir l'exactitude des découpes à une largeur prédéterminée et/ou à une longueur prédéterminée. De préférence, le manche de la roulette est perpendiculaire à la bande de convoyage de la zone de découpe 11. Les pâtes laminées découpées non conformes à la largeur prédéterminée et/ou à la longueur prédéterminée sont recyclées dans la zone de mise en forme. En amont de la zone de découpe, aucune découpe n'est effectuée sur la pâte laminée.

En aval de la zone de découpe, le procédé comprend une étape 5 de garnissage et/ou de montage. Cette étape permet de fabriquer des préparations telles que des lasagnes, des roulades ou des cannellonis. La garniture peut être adapté en fonction des demandes des clients et peut comprendre en outre un ou plusieurs constituants parmi des légumes, de la crème, de la sauce, du beurre, des oeufs, de la viande, du poisson, du fromage. Il est possible de mettre une couche de feuilles en pâte, au moins deux couches ou plus de feuilles en pâte. Les pâtes laminées précuites ou cuites préparées sont emballées et conditionnées en portions prêtes à l'emploi dans une zone de conditionnement. Le produit alimentaire peut être conditionné dans l'emballage sous une atmosphère inerte.

Par le terme « atmosphère inerte », on entend selon l'invention une atmosphère ayant la propriété de ne pas pouvoir réagir sur un produit. Préférentiellement, l'atmosphère inerte contient moins de 1% d'oxygène en volume. Alternativement, en fonction de produits frais, l'emballage hermétique peut être réalisé sous vide. De préférence, l'emballage est une barquette thermoformée. La barquette thermoformée peut contenir entre 200 et 4 000g de pâtes, de préférence entre 300 et 3 500g, de préférence entre 400 et 3 000g.

La zone de contrôle, en aval de la zone d'emballage comprend une balance pour contrôler le poids, un détecteur de métal et un oxymètre. Des tests de qualité du produit sont donc effectués dans la zone de contrôle, tels que la détection de métal, le tri pondéral et l'oxymétrie. Une fois les tests effectués, les pâtes laminées précuites ou cuites préparées et conditionnées en portions prêtes à l'emploi sont mises en bac/chariot, puis sont mises en cartons pour être transportées et expédiées jusqu'au consommateur.

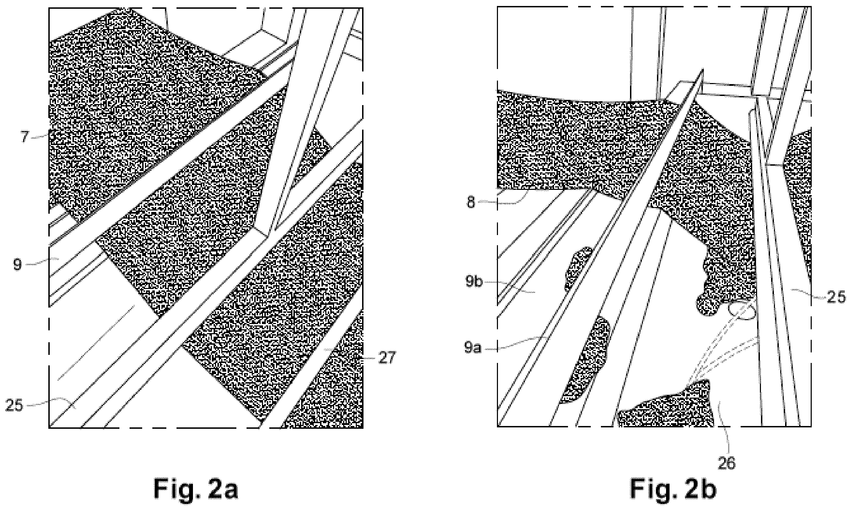

Les figures 2a et 2b illustrent la zone d'élimination partielle d'amidon comprenant la première barre fixe 9a, la deuxième barre mobile 9b, la troisième barre de guidage 27 et la quatrième barre 25. La zone d'élimination partielle d'amidon comporte une cuve 26 sous-jacente aux première, deuxième, troisième et quatrième barres. La cuve 26 permet de récupérer l'amidon éliminé à la surface des pâtes pour le traiter, le réutiliser et/ou le recycler.

la deuxième barre du racloir présente une hauteur comprise entre 1 et 10 cm, de préférence entre 1,2 et 7,5 cm, de préférence entre 1,5 et 5 cm. Le racloir présente une largeur comprise entre 0,5 et 5 cm, de préférence entre 0,6 et 3 cm, de préférence entre 0,7 et 2 cm. Le racloir présente une longueur comprise entre 70 et 90 cm, de préférence entre 72 et 88 cm, de préférence 75 et 85 cm. La deuxième barre mobile 9a pèse entre 400 et 700 g, de préférence entre 450 et 550 g, de préférence entre 470 et 490 g. Le poids est adapté pour ne pas abîmer la pâte laminée traversant le racloir.

La quatrième barre 25 est positionnée entre le racloir 9 et la troisième barre 27. La troisième barre 27 est un rouleau qui tourne pour faire guider la feuille de pâte sans la casser.

La troisième barre 27 est positionnée en aval de la zone de cuisson, la pâte laminée passe d'abord en-dessous de la troisième barre 27, puis en dessous de la quatrième barre 25 et passe ensuite entre la première barre fixe 9a et la deuxième barre mobile 9b. La quatrième barre 25 est positionné plus bas dans la cuve par rapport au plan horizontal du racloir 9.

La troisième barre 25 présente des ouvertures pour le passage de liquide, de préférence le liquide est destiné à asperger la pâte laminée d'eau. Cela permet d'humidifier la pâte pour éviter le collage de l'amidon dans la zone d'élimination partielle d'amidon. La zone d'élimination partielle d'amidon a pour objectif d'enlever partiellement la couche d'amidon gélifié présente sur les deux faces de la pâte laminée mais pas complètement pour conserver ses propriétés adhérentes. L'arrivée d'eau permet de ne pas casser la pâte lorsque l'amidon est raclé sur la face supérieure de la pâte laminée et d'autres part de manipuler facilement la pâte. L'arrivée d'eau de la troisième barre 25 permet d'éviter le nettoyage régulier du racloir, il n'est pas nécessaire de nettoyer le racloir pendant le procédé de fabrication de pâtes laminées.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé continu pour la fabrication de pâtes laminées à partir d'ingrédients constitutifs comprenant les étapes de :
- amenée d'un mélange contenant lesdits ingrédients constitutifs,
- laminage dudit mélange pour obtenir des pâtes laminées présentant une face supérieure et une face inférieure,
- cuisson au moins partielle desdites pâtes laminées pour obtenir des pâtes laminées précuites ou cuites,
- conditionnement des pâtes laminées précuites ou cuites pour obtenir des pâtes prêtes à l'emploi,
**caractérisé en ce que** ledit procédé comprend en aval de l'étape de cuisson, une étape d'élimination partielle d'amidon desdites pâtes laminées précuites ou cuites, durant laquelle l'amidon présent sur ladite face supérieure et ladite face inférieure desdites pâtes laminées est continuellement et uniformément éliminé par un passage dans un espace déterminé entre une première barre fixe et une deuxième barre mobile dimensionnée pour exercer une pression comprise entre 4,5.10⁻³ et 6,5.10⁻³ N/m² et appuyant, sous l'effet de son propre poids, sur la face supérieure desdites pâtes laminées et agir comme un racloir pour éliminer une quantité d'amidon de 60 à 90g/m² de pâtes laminées précuites ou cuites, de préférence de 65 à 85g/m² de pâtes laminées précuites ou cuites, de préférence de 70 à 80g/ m² de pâtes laminées précuites ou cuites sans en détériorer la pâte.

2. Procédé selon la revendication 1, dans lequel l'étape d'amenée du mélange est précédée d'une étape de structuration comprenant en outre :
- un dosage et une amenée des ingrédients constitutifs,
- un mélange des ingrédients constitutifs pour l'obtention d'une pâte granuleuse, et
- un pétrissage dudit mélange pour l'obtention d'une pâte homogène et lisse.

3. Procédé selon la revendication 2, dans lequel ladite étape de cuisson au moins partielle des pâtes laminées pour obtenir des pâtes laminées précuites ou des pâtes laminées cuites comprend une ou plusieurs étapes parmi
(i) un passage dans un bac d'eau chaude à une première température de cuisson pendant une première période de temps prédéterminée pour obtenir lesdites pâtes laminées précuites ou lesdites pâtes laminées cuites,
(ii) une collecte desdites pâtes précuites ou desdites pâtes cuites et un passage à l'air libre des pâtes laminées précuites ou des pâtes laminées cuites avec pulvérisation de liquide froid à une température comprise entre 4°C et 20°C,
(iii) un passage dans un bac d'eau froide à une deuxième température pendant une deuxième période de temps prédéterminée des pâtes laminées précuites ou des pâtes laminées cuites pour obtenir des pâtes laminées précuites ou des pâtes laminées cuites à une température inférieure à 10°C.

4. Procédé selon l'une quelconque des revendications précédentes, comprenant en outre une étape de découpe desdites pâtes laminées précuites ou cuites à une largeur prédéterminée et à une longueur prédéterminée.

5. Procédé selon la revendication 4, dans lequel l'étape de découpe est suivie d'une étape de recyclage, dans laquelle des pâtes laminées découpées non conformes à ladite largeur prédéterminée et/ou à ladite longueur prédéterminée sont recyclées à l'étape de laminage.

6. Procédé selon l'une quelconque des revendications précédentes, comprenant en outre une étape de garnissage desdites pâtes laminées précuites ou cuites.

7. Procédé selon la revendication 6, dans lequel l'étape de garnissage desdites pâtes laminées précuites ou cuites est réalisée en amont d'une étape de montage desdites pâtes laminées précuites ou cuites.

8. Dispositif pour la fabrication de pâtes laminées à partir d'ingrédients constitutifs comprenant :
- une zone de laminage pour obtenir des pâtes laminées, reliée à
- une zone de cuisson pour obtenir des pâtes laminées précuites ou cuites comprenant en outre une cuve de cuisson, en aval de la zone de laminage, reliée à
- une zone de conditionnement pour obtenir des pâtes laminées précuites ou cuites prêtes à l'emploi,
**caractérisé en ce que** ledit dispositif comprend en outre, en aval de la zone de cuisson, une zone d'élimination partielle d'amidon comprenant une première barre fixe et une deuxième barre mobile dimensionnée pour exercer une pression comprise entre 4,5.10⁻³ et 6,5.10⁻³ N/m² et appuyant, sous l'effet de son propre poids, sur les pâtes laminées et formant un racloir agencé pour recevoir en continu lesdites pâtes laminées précuites ou cuites.

9. Dispositif selon la revendication 8, comprenant en outre une troisième barre, en amont dudit racloir.

10. Dispositif selon la revendication 8 ou la revendication 9, dans lequel ledit racloir entre ladite première barre fixe et ladite deuxième barre mobile présente une hauteur comprise entre 1 et 10 cm, une largeur compris entre 0,5 et 5 cm et une longueur comprise entre 70 et 90 cm.

11. Dispositif selon l'une quelconque des revendications 8 à 10, dans lequel le racloir est dans une cuve.

12. Produit à base de pâtes laminées précuites ou cuites, obtenu directement du procédé selon l'une quelconques des revendications 1 à 7, dans lequel lesdites pâtes laminées précuites ou cuites présentent un taux d'humidité compris entre 40 et 60%, de préférence entre 45 et 55%, de préférence entre 49 et 51% et sont déplétées d'un pourcentage d'amidon compris entre 1 et 10 %, de préférence entre 1,5 et 8 %, de préférence entre 2 et 6 %.

13. Produit à base de pâtes laminées précuites ou cuites selon la revendication 12, comprenant une garniture comprenant un ou plusieurs constituants parmi des légumes, de la crème, de la sauce, du beurre, des oeufs, de la viande, du poisson, du fromage.

14. Produit à base de pâtes laminées précuites ou cuites selon l'une des revendications 12 ou 13, comprenant au moins deux couches de pâtes laminées précuites ou cuites.

15. Produit à base de pâtes laminées précuites ou cuites selon l'une quelconque des revendications 12 à 14, dans lequel lesdites pâtes laminées précuites ou cuites sont conditionnées en portions prêtes à l'emploi.
